# EUROPEAN PATENT APPLICATION

(11) **EP 4 580 196 A1**
(43) Date of publication of application: **02.07.2025**
(21) Application number: 23856513.9
(22) Date of filing: 16.08.2023
(51) Int. Cl.: H04N 21/431

(54) **INFORMATION DISPLAY METHOD AND APPARATUS**

(30) Priority: 24.08.2022 CN 202211020868
(71) Applicant: BEIJING YOUZHUJU NETWORK TECHNOLOGY CO. LTD., Beijing 101299 (CN)
(72) Inventor: LI, Liya, Beijing 100028 (CN); CHEN, Jiuyi, Beijing 100028 (CN); WANG, Li, Beijing 100028 (CN)
(74) Representative: Dentons UK and Middle East LLP
(86) International application number: PCT/CN2023/113230
(87) International publication number: WO 2024/041423

(57) **Abstract**

Disclosed in the present application is an information display method. A client can display an information display page of a first object. A user can trigger, in the information display page of the first object, an operation of entering a video playing page. Correspondingly, the client can display the video playing page in response to the operation of entering the video playing page, and display, in the video playing page, attribute information of an object set corresponding to the video playing page, wherein the attribute information of the object set at least comprises attribute information of the first object. It can be seen therefrom that, by utilizing the solution in the embodiments of the present application, a user triggers, in an information display page of a first object, an operation of entering a video playing page, such that the user can check attribute information of the first object in the video playing page which is displayed by a client, thereby improving the video watching experience of the user.

## Description

This application claims the priority of Chinese Patent Application No. 202211020868.9, entitled "Information presentation method and apparatus" filed on August 24, 2022, the disclosure of which is incorporated by reference herein in its entirety as part of the present application.

### TECHNICAL FIELD

The present disclosure relates to a field of computer technologies, and more particularly, to an information presentation method and apparatus.

### BACKGROUND

With the development of computer technologies, some applications provide a video playback function. A user can publish videos or watch videos through the applications. At present, the user who publishes a video can explain some objects, for example, commodities, in the published video.

At present, when the user is viewing a video in which an object is explained, viewing experience is not very good. Therefore, there is an urgent need for a solution that can solve the above-described problem.

### SUMMARY

In order to solve or partially solve the above technical problem, embodiments of the present disclosure provide an information presentation method and apparatus.

In the first aspect, the embodiments of the present disclosure provide an information presentation method, the method comprises:
displaying an information presentation page of a first object;
receiving an operation for entering a video playback page triggered on the information presentation page; and
in response to the operation for entering the video playback page, displaying the video playback page, and presenting attribute information of an object set corresponding to the video playback page on the video playback page, in which the attribute information of the object set at least comprises attribute information of the first object.

Optionally, the video playback page is a live streaming video playback page, and receiving an operation for entering a live streaming room triggered on the information presentation page comprises:
receiving the operation for entering the live streaming room triggered for a target content on the information presentation page, in which the target content comprises a state identifier for indicating a live streaming state or a thumbnail window for presenting a live streaming image;
correspondingly, in response to the operation for entering the video playback page, the displaying the video playback page comprises:
in response to the operation for entering the live streaming room, displaying the live streaming video playback page corresponding to the live streaming room.

Optionally, the presenting attribute information of an object set corresponding to the video playback page on the video playback page comprises:
displaying an object attribute information presentation interface on the video playback page; in which the attribute information presentation interface comprises the attribute information of the object set;
the object attribute information presentation interface comprises at least one region; each of the at least one region is configured to present attribute information of one object in the object set; and each of the at least one region presents a different object.

Optionally, the object set further comprises a second object, the second object is an object being explained on the video playback page, and attribute information of the second object is displayed at the top of the attribute information of the object set; and a first region for presenting the attribute information of the first object and a second region for presenting the attribute information of the second object are two adjacent regions in the at least one region on the attribute information presentation page.

Optionally, the object set comprises a plurality of objects; attribute information of the plurality of objects is presented in a preset order in the at least one region; and a presentation content of the object attribute information presentation interface comprises the attribute information of the first object.

Optionally, the method further comprises:
presenting prompt information in the first region; in which the prompt information is used for indicating that the first object is an object having been viewed within a preset time period.

Optionally, the information presentation page is a commodity detail page.

In the second aspect, the embodiments of the present disclosure provide an information presentation apparatus, the apparatus comprises:
a first display unit, configured to display an information presentation page of a first object;
a receiving unit, configured to receive an operation for entering a video playback page triggered on the information presentation page;
a second display unit, configured to, in response to the operation for entering the video playback page, display the video playback page; and
a third display unit, configured to present attribute information of an object set corresponding to the video playback page on the video playback page, in which the attribute information of the object set at least comprises attribute information of the first object.

Optionally, the video playback page is a live streaming video playback page, and the receiving unit is configured to:
receive the operation for entering the live streaming room triggered for a target content on the information presentation page, in which the target content comprises a state identifier for indicating a live streaming state or a thumbnail window for presenting a live streaming image;
correspondingly, the second display unit is configured to, in response to the operation for entering the live streaming room, display the live streaming video playback page corresponding to the live streaming room.

Optionally, the third display unit is configured to:
display an object attribute information presentation interface on the video playback page; in which the attribute information presentation interface comprises the attribute information of the object set;
the object attribute information presentation interface comprises at least one region; each of the at least one region is configured to present attribute information of one object in the object set; and each of the at least one region presents a different object.

Optionally, the object set further comprises a second object, the second object is an object being explained on the video playback page, and attribute information of the second object is displayed at the top of the attribute information of the object set; and a first region for presenting the attribute information of the first object and a second region for presenting the attribute information of the second object are two adjacent regions in the at least one region on the attribute information presentation page.

Optionally, the object set comprises a plurality of objects; attribute information of the plurality of objects is presented in a preset order in the at least one region; and a presentation content of the object attribute information presentation interface comprises the attribute information of the first object.

Optionally, the apparatus further comprises:
a fourth display unit, configured to present prompt information in the first region; in which the prompt information is used for indicating that the first object is an object having been viewed within a preset time period.

Optionally, the information presentation page is a commodity detail page.

In the third aspect, the embodiments of the present disclosure provide a device, the device comprises a processor and a memory; the processor is configured to execute an instruction stored in the memory, to allow the device to execute the method according to any item of the first aspect.

In the fourth aspect, the embodiments of the present disclosure provide a computer readable storage medium, which comprises an instruction, the instruction instructs a device to execute the method according to any item of the first aspect.

In the fifth aspect, the embodiments of the present disclosure provide a computer program product, the computer program product, when running on a computer, causes the computer to execute the method according to any item of the first aspect.

Compared with the prior art, the embodiments of the present disclosure have advantages below.

The embodiments of the present disclosure provide an information presentation method, in one example, the method can be executed by a client. The client may display an information presentation page of a first object. The user may trigger an operation for entering a video playback page on the information presentation page of the first object. It is considered that the user may wish to obtain information related to the first object from the video playback page through triggering the operation for entering the video playback page on the information presentation page of the first object. Therefore, in response to the operation for entering the video playback page, the client can display the video playback page, and present attribute information of an object set corresponding to the video playback page on the video playback page; the attribute information of the object set may include attribute information of at least one object included in the object set, and the at least one object includes the first object. In other words, the attribute information of the object set at least includes the attribute information of the first object. Thus, it may be seen that by using the solution of the embodiments of the present disclosure, the user can view the attribute information of the first object on the video playback page presented on the client through triggering the operation for entering the video playback page on the information presentation page of the first object, thereby improving video viewing experience of the user.

### BRIEF DESCRIPTION OF DRAWINGS

To describe the technical solutions in the embodiments of the present disclosure or in the prior art more clearly, the accompanying drawings required in the description of the embodiments or the prior art will be described briefly below. Apparently, the accompanying drawings described below are only about some embodiments of the present disclosure, other accompanying drawings can also be derived from these drawings by those ordinarily skilled in the art without creative efforts.
Fig. 1 is a schematic flow chart of an information presentation method provided by an embodiment of the present disclosure;
Fig. 2 is a schematic diagram of a commodity detail page provided by an embodiment of the present disclosure;
Fig. 3 is a schematic diagram of a live streaming video playback page provided by an embodiment of the present disclosure; and
Fig. 4 is a structural schematic diagram of an information presentation apparatus provided by an embodiment of the present disclosure.

### DETAILED DESCRIPTION

In order to enable those skilled in the art to better understand the technical solutions of the present disclosure, the following will provide a clear and complete description of the technical solutions in the embodiments of the present application in conjunction with the accompanying drawings. Obviously, the described embodiments are only a part but not all of the embodiments of the present disclosure. Based on the embodiments of the present disclosure, all other embodiments obtained by those skilled in the art without creative efforts are within the protection scope of the present disclosure.

The inventor(s) of the present disclosure finds through study that at present, when a user is viewing a video in which an object is explained, viewing experience is not very good. In one example, the video may be used for explaining a plurality of objects, and the user may trigger an operation for entering a video playback page through an information presentation page of any object of the plurality of objects. At present, after the user triggers the operation for entering the video playback page through an information presentation page of a certain object, the client can present the video playback page, and the video playback page may present information of the object currently being explained. For example, after the user triggers the operation for entering the video playback page through the information presentation page of the first object, the client presents the video playback page, while the object currently being explained is a second object, therefore, the video playback page may present relevant information of the second object.

It is considered that the user triggering the operation for entering the video playback page through the information presentation page of the first object may, to some extent, indicate that the user wishes to obtain information related to the first object from the video playback page. However, what is displayed on the current video playback page is the information of the object being explained. When the object being explained is not the first object, the user cannot obtain the relevant information of the first object through the video playback page, resulting in poor video viewing experience of the user.

In order to solve the above-described problem, the embodiments of the present disclosure provide an information presentation method and apparatus, which can improve video viewing experience of the user.

Hereinafter, various non-limitative implementations of the present disclosure will be described in detail in conjunction with the accompanying drawings.

### Exemplary method

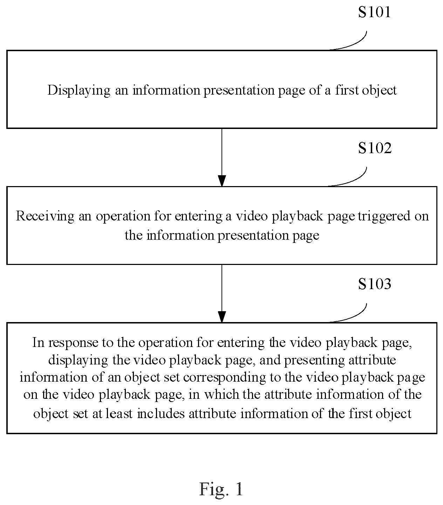

Referring to Fig. 1, which is a schematic flow chart of an information presentation method provided by an embodiment of the present disclosure; and the information presentation method shown in Fig. 1 may be executed by a client.

In this embodiment, the method, for example, may include the following steps: S101 to S103.

S101: displaying an information presentation page of a first object.

In the embodiments of the present disclosure, the information presentation page of the first object may be a page used for presenting information of the first object. The information presentation page of the first object is not specifically limited in the embodiments of the present disclosure; in one example, the first object is a commodity, and correspondingly, the information presentation page of the first object may be a commodity detail page.

In one example, the information of the first object includes but is not limited to: image information of the first object and/or resource information of the first object, the image information of the first object may be a picture of the first object, or may also be a video used for introducing the first object. The resource information of the first object may be a resource used for obtaining the first object. For example, the resource information of the first object may be a resource value used for obtaining the first object; and the resource mentioned here includes but is not limited to a virtual coupon; and the resource, for example, may be a virtual resource such as a prop, a card coupon, etc.

In one example, the information presentation page of the first object may include other content in addition to the information of the first object, for example, may include at least one interactive control; and the user may trigger a corresponding interactive operation by using the interactive control. The interactive control mentioned here, includes but is not limited to, a control that triggers a sharing operation, a control that triggers an add-to-favorites operation, and a control that triggers an object acquiring operation, etc., and no details will be repeated here. In one example, the user may trigger a corresponding operation on a first page displayed on the client, so that the page presented by the client is switched to the information presentation page of the first object. For example, the first page may include summary information of a plurality of objects; and after the user triggers an operation through the summary information of the first object, the page presented by the client is switched from the first page to the information presentation page of the first object. The summary information of the first object is not limited in the embodiments of the present disclosure; and the summary information of the first object may also include the image information of the first object and/or the resource information of the first object.

102: receiving an operation for entering a video playback page triggered on the information presentation page.

After the client displays the information presentation page of the first object, the user may trigger the operation for entering the video playback page on the information presentation page; and correspondingly, the client may receive the operation for entering the video playback page triggered on the information presentation page.

The video playback page is not limited in the embodiments of the present disclosure; and the video playback page may be a short video playback page, or may also be a long video playback page, or may also be a live streaming video playback page.

In one example, the user may trigger a preset operation, for example, a slide operation or a click operation, in a preset region on the information presentation page, so as to trigger the operation for entering the video playback page.

In another example, when the video playback page is a short video playback page, the information presentation page of the first object may include a target content, and the user may trigger an operation for entering the live streaming room through the target content. For example, the user may click on the target content to trigger the operation for entering the live streaming room. Correspondingly, the client may receive the operation for entering the live streaming room triggered for the target content on the information presentation page.

In one example, the target content may be a state identifier used for indicating a live streaming state, for example, may be an icon used for indicating the live streaming state; and the icon may be a static icon or a dynamic icon, which will not be specifically limited in the embodiments of the present disclosure. In another example, the target content may be a thumbnail window used for presenting a live streaming image.

S103: in response to the operation for entering the video playback page, displaying the video playback page, and presenting attribute information of an object set corresponding to the video playback page on the video playback page, in which the attribute information of the object set at least includes attribute information of the first object.

After receiving the operation for entering the video playback page, the client may display the video playback page in response to the operation for entering the video playback page. In one example, when the operation for entering the video playback page is the operation for entering the live streaming room, the video playback page may be the video playback page corresponding to the live streaming room.

In the embodiments of the present disclosure, the displaying of the video playback page may be specifically implemented in a variety of ways. For example, the client may jump the displayed page from the information presentation page of the first object to the video playback page. For another example, the client may partition a certain region on the information presentation page of the first object for presenting the video playback page. For another example, a video playback window corresponding to the video playback page may be presented on the information presentation page of the first object, etc., and no details will be repeated here.

In the embodiments of the present disclosure, it is considered that the user may wish to obtain information related to the first object from the video playback page through triggering the operation for entering the video playback page on the information presentation page of the first object. Therefore, the client may further present the attribute information of the object set corresponding to the video playback page on the video playback page in addition to displaying the video playback page; the attribute information of the object set may include attribute information of at least one object included in the object set; and the at least one object includes the first object. In other words, the attribute information of the object set at least includes the attribute information of the first object.

With respect to the object set corresponding to the video playback page, in one example, it may be a collection of objects explained through the video playback page. For example, when the video playback page is a page corresponding to the live streaming room, the object set corresponding to the video playback page may be a collection of objects explained in the live streaming room. In one example, when the object is a commodity, the object set corresponding to the video playback page may be a collection of commodities that are explained in the live streaming room and may be purchased in the live streaming room.

In one example, the attribute information of the object set may be presented in the preset region on the video playback page.

In another example, the video playback page may display an object attribute information presentation interface; and the attribute information presentation interface includes the attribute information of the object set. In one example, the object attribute information presentation interface may include at least one region; each of the at least one region is used for presenting attribute information of one object in the object set; and each region presents a different object. In other words, the at least one region included in the object attribute information presentation interface may have one-to-one correspondence with the at least one object in the object set. In one example, the object attribute information presentation interface may be presented in a form of a floating layer on the video playback page. In another example, the object attribute information presentation interface may be presented in a form of a split screen on the video playback page. For example, the video playback page is split according to a certain proportion, to obtain a split screen region for presenting the object attribute information; and the object attribute information presentation interface is presented in the split screen region.

In one example, the object set may include a plurality of objects; and attribute information of the plurality of objects may be presented in a preset order in the at least one region. The user may trigger an operation on the object attribute information presentation interface, so as to switch the presentation content of the object attribute information presentation interface between attribute information corresponding to the respective objects. For example, the user may trigger a slide operation on the object attribute information presentation interface, so that the presentation content of the object attribute information presentation interface is switched between the attribute information corresponding to the respective objects. In the embodiments of the present disclosure, in order to facilitate the user to view the attribute information of the first object, the presentation content of the object attribute information presentation interface includes the attribute information of the first object. In other words, after the user triggers the operation for entering the video playback page, the client can display the video playback page and display the object attribute information presentation interface; and the presentation content of the object attribute information presentation interface is located at the attribute information of the first object. In this case, when presenting the attribute information of the first object, the client directly locates a position of a display region presenting the attribute information of the first object and presents the attribute information of the first object on the object attribute information presentation interface, without adjusting the position of the display region of the attribute information corresponding to the first object on the object attribute information presentation interface. In this way, the user can directly view the attribute information of the first object without triggering a slide operation on the object attribute information presentation interface.

Now it is illustrated by taking the object as a commodity and taking the foregoing video playback page as the live streaming video playback page, as an example.

Assuming that there are a total of 10 commodities that need to be explained and may be purchased in the live streaming room; the 10 commodities are numbered; and a commodity number of the commodity corresponding to the foregoing first object is 5. Then, the 10 commodities are presented on the object attribute information presentation interface according to a number sequence of the 10 commodities on the object attribute information presentation interface; and the presentation content of the current object attribute information presentation interface is located in a display region of the first object with the commodity number of 5.

In one example, the foregoing object set may further include a second object being explained on the video playback page in addition to the first object. With respect to this case, in one example, attribute information of the second object may be displayed at the top of the attribute information of the object set, to facilitate the user to view the attribute information of the second object currently being explained. In addition, considering the user's demand to obtain the attribute information of the first object through the video playback page, a first region for presenting the attribute information of the first object and a second region for presenting the attribute information of the second object are two adjacent regions in the at least one region on the attribute information presentation page. With respect to this case, when presenting the attribute information of the first object, the client may adjust the position of the display region of the attribute information corresponding to the first object on the object attribute information presentation interface, so that the first region and the second region are two adjacent regions. In other words, the attribute information of the second object may be displayed at the top of the attribute information of the object set, and the attribute information of the first object may be displayed next thereto in the attribute information of the object set, to facilitate the user to view the attribute information of the first object on the attribute information presentation page.

Now it is illustrated by taking the object as a commodity and taking the foregoing video playback page as the live streaming video playback page, as an example.

Assuming that there are a total of 10 commodities that need to be explained and may be purchased in the live streaming room; the 10 commodities are numbered; a commodity number of the commodity corresponding to the foregoing first object is 5; and a commodity number of a commodity corresponding to the second object is 2. Then, from top to bottom, an presentation order of attribute information of the respective objects on the object attribute information presentation interface is sequentially: attribute information of the object with the number of 2, attribute information of the object with the number of 5, attribute information of an object with the number of 1, attribute information of an object with the number of 3, attribute information of an object with the number of 4, attribute information of an object with the number of 6, attribute information of an object with the number of 7, attribute information of an object with the number of 8, attribute information of an object with the number of 9, and attribute information of an object with the number of 10. In the embodiments of the present disclosure, the attribute information of the object may be information used for describing an object attribute. The attribute information of the object includes, but is not limited to, image information of the object and/or resource information of the object. The relevant description section above may be referred to for the image information and the resource information, and no details will be repeated here.

In one example, the user may compare the resource information presented on the object information presentation page with the resource information of the first object presented on the video playback page, to determine whether to trigger a corresponding operation for the first object (e.g., purchasing the first object) on the video playback page.

In one example, the attribute information of the object may further include explanation state information of the object; and the explanation state information is used for indicating an explanation state of the first object on the video playback page.

As an example, the explanation state of the first object may be a state of having been explained; with respect to this case, the user may trigger an operation for explanation state information; and correspondingly, the client may, in response to the trigger operation for the explanation state information, play a live streaming explanation playback video of the first object, for example, play the live streaming explanation playback video of the first object in a form of a thumbnail window on the video playback page.

As another example, the explanation state of the first object may be an unexplained state; with respect to this case, the user may trigger an operation for explanation state information, and correspondingly, the client may send a request information of requesting to explain the first object on the video playback page to a server in response to the trigger operation for the explanation state information, so that the server generates a recommended explanation sequence for the plurality of objects based on the request information, and sends the recommended explanation sequence to the client corresponding to a video publisher, for example, sends the recommended explanation sequence to an anchor client.

In addition, the object attribute information presentation interface may further include at least one interactive control corresponding to the respective objects in addition to the attribute information of the object set, so that the user may trigger a corresponding interactive operation on the object attribute information presentation interface. For example, the first region may include an interactive control corresponding to the first object, and the user may trigger an interactive operation related to the first object through an interactive trigger in the first region. The relevant description above may be referred to for the interactive control, and no details will be repeated here.

In one example, the client may further present prompt information in the first region; and the prompt information is used for prompting that the first object is an object having been viewed within a preset time period, thereby prompting the user that the first object has been viewed within the preset time period. The preset time period will not be specifically limited in the embodiments of the present disclosure; the preset time period may be determined according to actual situations, and no details will be repeated here.

From the above description, it can be known that by using the solution of the embodiments of the present disclosure, the user can view the attribute information of the first object on the video playback page presented on the client through triggering the operation for entering the video playback page on the information presentation page of the first object, thereby improving video viewing experience of the user.

Now the method provided by the embodiments of the present disclosure will be illustrated in conjunction with the accompanying drawings, by taking the first object as a commodity, and taking the information presentation page as the commodity detail page, as an example.

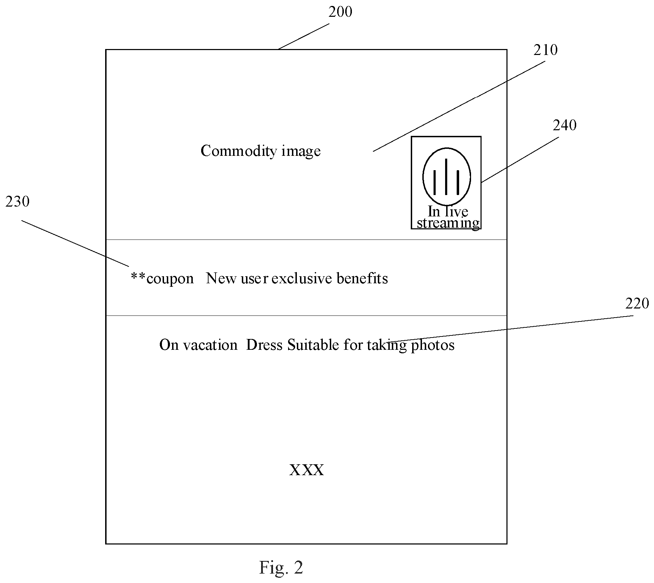

Referring to Fig. 2, which is a schematic diagram of a commodity detail page provided by an embodiment of the present disclosure.

As shown in Fig. 2, the commodity detail page 200 includes a picture 210 of the first object, a text description 220 of the first object, resource information 230 of the first object, and a state identifier 240 indicating the live streaming state. Other content on the commodity detail page is represented by "XXX" in Fig. 2.

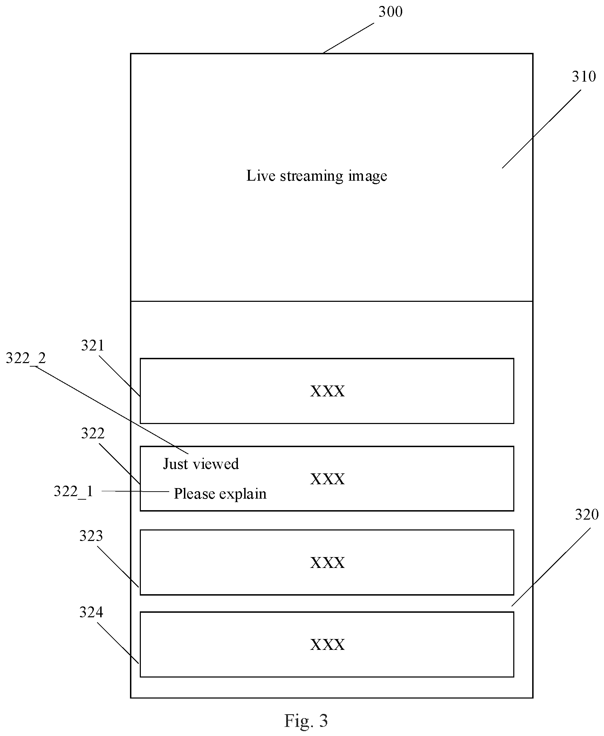

After the user triggers the operation for entering the live streaming room through the state identifier 240, the client presents a live streaming video playback page 300 corresponding to the live streaming room shown in Fig. 3.

The live streaming video playback page includes a live streaming image 310 and an object attribute information presentation interface 320 displayed in a form of a floating layer on the live streaming video playback page. The object attribute information presentation interface 320 includes a plurality of regions; the plurality of regions at least include a region 321 and a region 322; the region 321 is used for presenting the attribute information of the second object currently being explained, and the region 322 is used for presenting the attribute information of the first object. The attribute information of the first object and the attribute information of the second object are represented by "XXX" in Fig. 3.

In addition, the region 322 includes explanation state information 322_1: "Please explain" indicating that the first object has not been explained; and the region 322 further includes prompt information 322_2: "Just viewed" indicating that the first object has been viewed within a preset time period.

With respect to a region 323 and a region 324 included in the object attribute information presentation interface 320, the content exhibited in the region 321 or the region 322 may be referred to for the presentation content of the region 323 and the region 324, which is represented by "XXX" in Fig. 3.

With respect to Fig. 2 and Fig. 3, it should be noted that they are only shown for convenience of understanding the relevant content of this solution, and do not constitute limitations on the embodiments of the present disclosure.

### Exemplary device

Based on the method provided by the above embodiments, an embodiment of the present disclosure further provides an apparatus; and the apparatus will be introduced below in conjunction with the accompanying drawings.

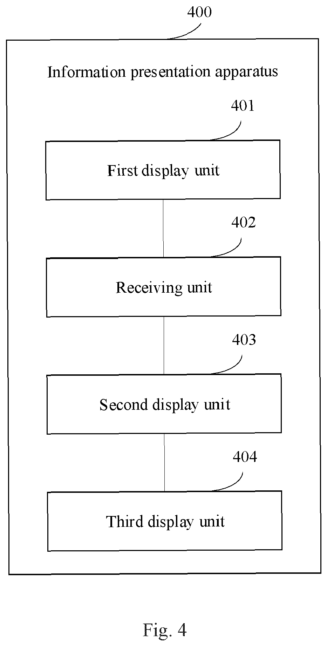

Referring to Fig. 4, which is a structural schematic diagram of an information presentation apparatus provided by an embodiment of the present disclosure. The apparatus 400, for example, may specifically include: a first display unit 401, a receiving unit 402, a second display unit 403, and a third display unit 404.

The first display unit 401 is configured to display an information presentation page of a first object.

The receiving unit 402 is configured to receive an operation for entering a video playback page triggered on the information presentation page.

The second display unit 403 is configured to, in response to the operation for entering the video playback page, display the video playback page; and

The third display unit 404 is configured to exhibit attribute information of an object set corresponding to the video playback page on the video playback page, in which the attribute information of the object set at least includes attribute information of the first object.

Optionally, the video playback page is a live streaming video playback page, and the receiving unit 402 is configured to:
receive the operation for entering the live streaming room triggered for a target content on the information presentation page, in which the target content includes a state identifier for indicating a live streaming state or a thumbnail window for presenting a live streaming image;
correspondingly, the second display unit 403 is configured to, in response to the operation for entering the live streaming room, display the live streaming video playback page corresponding to the live streaming room.

Optionally, the third display unit 404 is configured to:
display an object attribute information presentation interface on the video playback page; in which the attribute information presentation interface includes the attribute information of the object set;
the object attribute information presentation interface includes at least one region; each of the at least one region is configured to present attribute information of one object in the object set; and each of the at least one region presents a different object.

Optionally, the object set further includes a second object, the second object is an object being explained on the video playback page, and attribute information of the second object is displayed at the top of the attribute information of the object set; and a first region for presenting the attribute information of the first object and a second region for presenting the attribute information of the second object are two adjacent regions in the at least one region on the attribute information presentation page.

Optionally, the object set includes a plurality of objects; attribute information of the plurality of objects is presented in a preset order in the at least one region; and a presentation content of the object attribute information presentation interface includes the attribute information of the first object.

Optionally, the apparatus further includes:
a fourth display unit, configured to present prompt information in the first region; in which the prompt information is used for indicating that the first object is an object having been viewed within a preset time period.

Optionally, the information presentation page is a commodity detail page.

As the apparatus 400 corresponds to the method provided in the above method embodiments, the specific implementation of each unit of the apparatus 400 is based on the same concept as the above method embodiments. Therefore, for the specific implementation of each unit of the apparatus 400, reference can be made to the descriptions of the above method embodiments, which will not be repeated here.

The embodiments of the present disclosure further provide a device, the device includes a processor and a memory; the processor is configured to execute an instruction stored in the memory, to allow the device to execute the information presentation method according to any item of the above method embodiments.

The embodiments of the present disclosure provide a computer readable storage medium, which includes an instruction, the instruction instructs a device to execute the information presentation method according to any item of the above method embodiments.

The embodiments of the present disclosure provide a computer program product, the computer program product, when running on a computer, causes the computer to execute the information presentation method according to any item of the above method embodiments.

Those skilled in the art will easily come up with other embodiments of the present disclosure after considering the specification and practicing the solution disclosed herein. The present disclosure is intended to cover any variations, uses, or adaptive changes of the present disclosure, which follow the general principles of the present disclosure and include common knowledge or customary technical means in the art that are not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

The above descriptions are only the preferred embodiments of the present disclosure and are not intended to limit the present disclosure. Any modifications, equivalent substitutions, improvements, etc. made within the spirit and principles of the present disclosure should be included in the protection scope of the present disclosure.

## Claims

1. An information presentation method, comprising:
displaying an information presentation page of a first object;
receiving an operation for entering a video playback page triggered on the information presentation page; and
in response to the operation for entering the video playback page, displaying the video playback page, and presenting attribute information of an object set corresponding to the video playback page on the video playback page, wherein the attribute information of the object set at least comprises attribute information of the first object.

2. The method according to claim 1, wherein the video playback page is a live streaming video playback page, and receiving an operation for entering a live streaming room triggered on the information presentation page comprises:
receiving the operation for entering the live streaming room triggered for a target content on the information presentation page, wherein the target content comprises a state identifier for indicating a live streaming state or a thumbnail window for presenting a live streaming image;
correspondingly, in response to the operation for entering the video playback page, the displaying the video playback page comprises:
in response to the operation for entering the live streaming room, displaying the live streaming video playback page corresponding to the live streaming room.

3. The method according to claim 1, wherein the presenting attribute information of an object set corresponding to the video playback page on the video playback page comprises:
displaying an object attribute information presentation interface on the video playback page; wherein the attribute information presentation interface comprises the attribute information of the object set;
the object attribute information presentation interface comprises at least one region; each of the at least one region is configured to present attribute information of one object in the object set; and each of the at least one region presents a different object.

4. The method according to claim 3, wherein the object set further comprises a second object, the second object is an object being explained on the video playback page, and attribute information of the second object is displayed at the top of the attribute information of the object set; and a first region for presenting the attribute information of the first object and a second region for presenting the attribute information of the second object are two adjacent regions in the at least one region on the attribute information presentation page.

5. The method according to claim 3, wherein the object set comprises a plurality of objects; attribute information of the plurality of objects is presented in a preset order in the at least one region; and a presentation content of the object attribute information presentation interface comprises the attribute information of the first object.

6. The method according to claim 4, further comprising:
presenting prompt information in the first region; wherein the prompt information is used for indicating that the first object is an object having been viewed within a preset time period.

7. The method according to claim 1, wherein the information presentation page is a commodity detail page.

8. The method according to claim 1, wherein the displaying the video playback page comprises:
jumping from the information presentation page of the first object to the video playback page.

9. The method according to claim 3, wherein the displaying an object attribute information presentation interface on the video playback page comprises:
presenting the object attribute information presentation interface in a form of a floating layer on the video playback page; or
presenting the object attribute information presentation interface in a form of a split screen on the video playback page.

10. The method according to claim 3, wherein a presentation content of the object attribute information presentation interface is located at the attribute information of the first object.

11. The method according to claim 1, wherein the object set corresponding to the video playback page comprises a set of objects explained on the video playback page.

12. An information presentation apparatus, comprising:
a first display unit, configured to display an information presentation page of a first object;
a receiving unit, configured to receive an operation for entering a video playback page triggered on the information presentation page;
a second display unit, configured to, in response to the operation for entering the video playback page, display the video playback page; and
a third display unit, configured to exhibit attribute information of an object set corresponding to the video playback page on the video playback page, wherein the attribute information of the object set at least comprises attribute information of the first object.

13. A device, comprising a processor and a memory; wherein
the processor is configured to execute an instruction stored in the memory, to allow the device to execute the method according to any one of claims 1 to 11.

14. A computer readable storage medium, comprising an instruction, wherein the instruction instructs a device to execute the method according to any one of claims 1 to 11.

15. A computer program product, wherein the computer program product, when running on a computer, causes the computer to execute the method according to any one of claims 1 to 11.
